(19) Europäisches Patentamt / European Patent Office / Office européen des brevets

(11) **EP 3 637 380 A1**

(12) **EUROPEAN PATENT APPLICATION**
published in accordance with Art. 153(4) EPC

(43) Date of publication:
**15.04.2020 Bulletin 2020/16**

(51) Int Cl.:
**G07F 11/00** *(2006.01)*    **G06Q 30/02** *(2012.01)*

(21) Application number: **17912740.2**

(22) Date of filing: **26.10.2017**

(86) International application number:
**PCT/CN2017/107889**

(87) International publication number:
**WO 2018/223586 (13.12.2018 Gazette 2018/50)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **09.06.2017 CN 201710434434**

(71) Applicant: **Shenzhen Genuine Innovative
Technology Co., Ltd
Shenzhen, Guangdong 518000 (CN)**

(72) Inventor: **LI, Wenhua
Shenzhen, Guangdong 518000 (CN)**

(74) Representative: **Heimdal, Pär
Heimdal Patent AB
Hökarvägen 4
129 41 Hägersten (SE)**

(54) **VENDING METHOD AND DEVICE**

(57) The present application relates to the technical field of automatic vending, and in particular, relates to a method and apparatus for vending. The method includes: receiving a selection instruction for selecting an automatic vending machine; receiving a commodity keyword input by a user; determining, according to the keyword, whether the selected automatic vending machine contains a commodity corresponding to the keyword; sending information of the commodity to the user if the automatic vending machine contains the commodity corresponding to the keyword; receiving a purchase instruction for purchasing the commodity; and generating a two-dimensional code according to the purchase instruction, and sending the two-dimensional code to the user. According to the present application, the purchase on the automatic vending machine has been more convenience what is enhanced user experience.

```
                    ┌─────────────────────────────────┐  110
                    │ Receiving a selection instruction│
                    │ for selecting an automatic       │
                    │ vending machine                  │
                    └────────────────┬────────────────┘
                                     ▼
                    ┌─────────────────────────────────┐  120
                    │ Receiving a commodity keyword    │
                    │ input by a user                  │
                    └────────────────┬────────────────┘
                                     ▼
                    ◇─────────────────────────────────◇  130
                     Determining, according to the
                     keyword, whether the selected
                     automatic vending machine contains
                     a commodity corresponding to the
                     keyword
                    ◇─────────────────┬───────────────◇
                                  Yes ▼
                    ┌─────────────────────────────────┐  140
                    │ Sending information of the       │
                    │ commodity to the user            │
                    └────────────────┬────────────────┘
                                     ▼
                    ┌─────────────────────────────────┐  150
                    │ Receiving a purchase instruction │
                    │ for purchasing the commodity     │
                    └────────────────┬────────────────┘
                                     ▼
                    ┌─────────────────────────────────┐  170
                    │ Generating a two-dimensional code│
                    │ according to the purchase        │
                    │ instruction, and send the two-   │
                    │ dimensional code to the user     │
                    └─────────────────────────────────┘
```

FIG. 2

**EP 3 637 380 A1**

## Description

CROSS-REFERENCE TO RELATED APPLICATIONS

This application is based upon and claims priority to Chinese Patent Application No. 2017104344346, filed before Chinese Patent Office on June 9, 2017 and entitled "VENDING METHOD AND APPARAUS", the entire contents of which are incorporated herein by reference.

TECHNICAL FIELD

The present application relates to the technical field of automatic vending, and in particular, relates to a method for vending and apparatus.

BACKGROUND

At present, automatic vending machines are widely used, and the principle and structure of the automatic vending machine are well known. Generally, commodities to be sold are arranged in a vending container, and cottons respectively corresponding to the commodities are provided for a user to select his or her desired commodity. After the user correctly puts in coins or completes payment by scanning a two-dimensional code, the automatic vending machine dispends the commodity.

During practice of the present application, the inventors have identified that the related art has the following problem:

Commodities may be purchased only after an entity automatic vending machine is found, and a commodity to be purchased may be checked only in a window displayed by the automatic vending machine. As such, it is inconvenient for a user to purchase a commodity, and thus user experience is poor.

SUMMARY

Embodiments of the present application are intended to provide a method and apparatus for vending, to solve the problem that it is inconvenient for a user to purchase a commodity and thus user experience is poor.

According to one aspect of embodiments of the present application, a method for vending is provided. The method includes: receiving a selection instruction for selecting an automatic vending machine; receiving a commodity keyword input by a user; determining, according to the keyword, whether the selected automatic vending machine contains a commodity corresponding to the keyword; sending information of the commodity to the user if the automatic vending machine contains the commodity corresponding to the keyword; receiving a purchase instruction for purchasing the commodity; and generating a two-dimensional code according to the purchase instruction, and sending the two-dimensional code to the user.

Optionally, upon the receiving a purchase instruction for purchasing the commodity, the method further includes:
sending a lock instruction for locking the commodity to the automatic vending machine, such that the automatic vending machine locks the commodity to be purchased by the user.

Optionally, the method further includes:

acquiring geographic location information of the user if the automatic vending machine does not contain the commodity corresponding to the keyword; and recommending another automatic vending machine containing the commodity to the user according to the geographic location information of the user.

Optionally, the recommending another automatic vending machine containing the commodity to the user according to the geographic location information of the user includes:

determining, according to the geographic location information of the user, a target region where a plurality of automatic vending machines are deployed, and gridizing the target region, wherein the plurality of automatic vending machines all contain the commodity;
storing obstacles in the target region based on grids;
constructing a path evaluation function;
searching for an optional path by using the particle swarm optimization algorithm based on the gridized target region and the path evaluation function; and determining a target automatic vending machine according to a determined optional path, and recommending the target automatic vending machine to the user.

Optionally, the path evaluation function is:
$f(p) = \omega_1 time + \omega_2 traffic + \omega_3 length$ , wherein $\omega_1$ , $\omega_2$ and $\omega_3$ are weight coefficients, time represents the time elapsed when the user arrives at the automatic vending machine from a location of the user, traffic represents traffic conditions in a distance from the location of the user to the automatic vending machine, and length represents a path length from the location of the user to the automatic vending machine.

According to another aspect of embodiments of the present application, a apparatus for vending is provided. The apparatus includes: a first receiving module, configured to receive a selection instruction for selecting an automatic vending machine; a second receiving module, configured to receive a commodity keyword input by a user; a judging module, configured to judge, according to the keyword, whether the selected automatic vending machine contains a commodity corresponding to the keyword; a first sending module, configured to send information of the commodity to the user if the automatic vending machine contains the commodity corresponding to the keyword; a third receiving module, configured to receive a purchase instruction for purchasing the commodity; and a processing module, configured to generate a two-dimensional code according to the purchase instruction, and send the two-dimensional code to the user.

Optionally, the apparatus further includes:

an acquiring module, configured to acquire geographic location information of the user if the automatic vending machine does not contain the commodity corresponding to the keyword; and a recommending module, configured to recommend another automatic vending machine containing the commodity to the user according to the geographic location information of the user.

Optionally, the recommending module includes:

a first processing unit, configured to determine, according to the geographic location information of the user, a target region where a plurality of automatic vending machines are deployed, and gridize the target region, wherein the plurality of automatic vending machines all contain the commodity; a storing unit, configured to store obstacles in the target region based on grids; a second processing unit, configured to construct a path evaluation function; a searching unit, configured to search for an optional path by using the particle swarm optimization algorithm based on the gridized target region and the path evaluation function; and a recommending unit, configured to determine a target automatic vending machine according to a determined optional path, and recommend the target automatic vending machine to the user.

Optionally, the path evaluation function is:
$f(p) = \omega_1 time + \omega_2 traffic + \omega_3 length$ , wherein , . $\omega_1$ , $\omega_2$ and $\omega_3$ are weight coefficients, time represents the time elapsed when the user arrives at the automatic vending machine from a location of the user, traffic represents traffic conditions in a distance from the location of the user to the automatic vending machine, and length represents a path length from the location of the user to the automatic vending machine.

According to still another aspect of embodiments of the present application, an electronic device is provided. The electronic device includes: at least one processor; and a memory communicably connected to the at least one processor; wherein the memory stores instructions executable by the at least one processor, wherein, the instructions, when being executed by the at least one processor, cause the at least one processor to perform the method as described above.

According to yet still another aspect of embodiments of the present application, a non-volatile computer readable storage medium. The computer readable storage medium stores computer executable instructions, which, when being executed by a computer, cause the computer to perform the method as described above.

According to yet still another aspect of embodiments of the present application, a computer program product is provided. The computer program product includes computer programs stored in a non-volatile computer readable storage medium, wherein the computer programs includes program instructions, which, when being executed by a computer, cause the computer to perform the method as described above.

According to embodiments of the present application, a user selects an automatic vending machine via an App, and purchases a commodity on the App; after the user successfully purchase the commodity, a server generates a two-dimensional code, and sends the two-dimensional code to the user; and the user takes out the purchased commodity from an entity automatic vending machine according to the two-dimensional code. According to the present application, great convenience is brought to the user when the user purchases a commodity by using an automatic vending machine, and thus user experience is enhanced.

BRIEF DESCRIPTION OF THE DRAWINGS

One or more embodiments are illustrated by way of example, and not by limitation, in the figures of the accompanying drawings, wherein components having the same reference numeral designations represent like components throughout. The drawings are not to scale, unless otherwise disclosed.

FIG. 1 is a schematic structural diagram of an implementation environment involved in various embodiments of the present application;
FIG. 2 is a schematic flowchart of a method for vending according to Embodiment 1 of the present application;
FIG. 3 is a schematic flowchart of a method for vending according to Embodiment 2 of the present application;
FIG. 4 is a schematic flowchart of a method for vending according to Embodiment 3 of the present application;
FIG. 5 is a schematic flowchart of a method for recommending another automatic vending machine containing the commodity to the user according to the geographic location information of the user according to Embodiment 3 of the present application.
FIG. 6 is a schematic flowchart of a method for vending according to Embodiment 4 of the present application;
FIG. 7 is a schematic structural diagram of a apparatus for vending according to Embodiment 6 of the present application; and
FIG. 8 is a schematic structural diagram illustrating hardware of an electronic device for performing the method for vending according to Embodiment 6 of the present application.

## DETAILED DESCRIPTION

To make the objective, technical solution, and advantages of the present application clearer, the present application is further described with reference to specific embodiments and attached drawings. It should be understood that the specific embodiments described herein are only intended to explain the present application instead of limiting the present application.

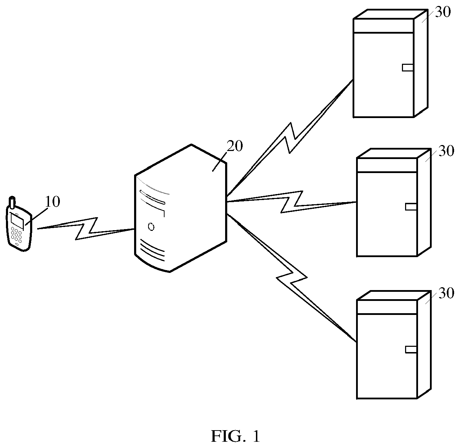

Referring to FIG. 1, FIG. 1 is a schematic structural diagram of an implementation environment involved in various embodiments of the present application. As illustrated in FIG. 1, the implementation environment includes: a user terminal 10, a server 20 and an automatic vending machine 30.

The user terminal 10 may be a mobile phone, a tablet computer, a smart bracelet and the like electronic device. The user terminal 10 may run a browser, or run other applications on which webpages may be loaded or displayed, for example, shopping applications, payment applications, social networking applications or the like. The user terminal 10 may be connected to the server 20 via a wireless network or a wired network.

The server 20 may be a server, or a server cluster formed of a plurality of servers, or a cloud computing service center.

The automatic vending machine 30 may be connected to the server 20 via a wireless network or a wired network. The automatic vending machine 30 is configured to store various commodities, and has a code scanning interface through which a two-dimensional code on the user terminal 10 may be scanned. The automatic vending machine 30 is capable of recommending commodities according to the scanned two-dimensional code, and in addition, the automatic vending machine 30 also has all the functions of a traditional automatic vending machine.

It should be noted that FIG. 1 only illustrates one user terminal 10, one server 20 and three automatic vending machines 30. A person skilled in the art would understand that any number of user terminals 10, servers 20 and automatic vending machines 30 may be included.

Based on the implementation environment, the embodiments of the present application herein provide a method and apparatus for vending. Steps in the method may be performed by a server; and the apparatus for vending may be arranged in the server as a software or hardware functional unit, or may be a functional module integrated in the server to perform the method according to the embodiments of the present application.

Embodiment 1

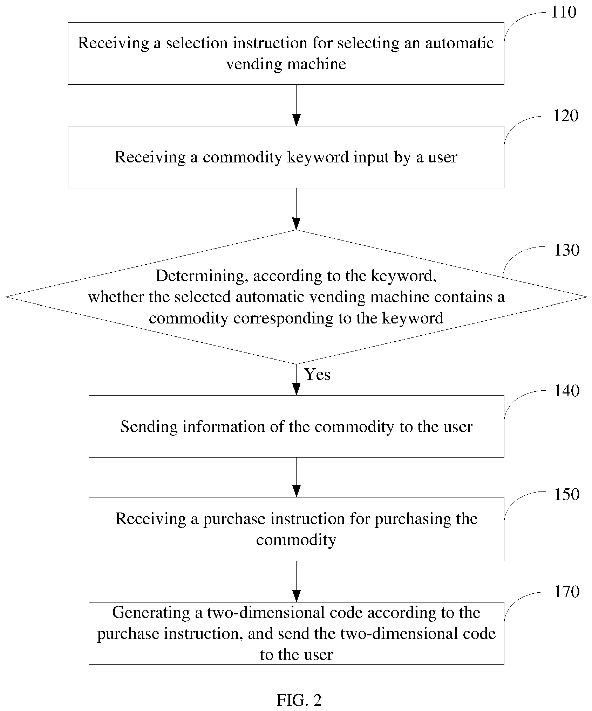

Referring to FIG. 2, FIG. 2 is a schematic flowchart of a method for vending according to Embodiment 1 of the present application. As illustrated in FIG. 2, the method for vending includes the following steps:

step 110: receiving a selection instruction for selecting an automatic vending machine;
step 120: receiving a commodity keyword input by a user;
step 130: determining, according to the keyword, whether the selected automatic vending machine contains a commodity corresponding to the keyword;
step 140: sending information of the commodity to the user if the automatic vending machine contains the commodity corresponding to the keyword;
step 150: receiving a purchase instruction for purchasing the commodity; and
step 170: generating a two-dimensional code according to the purchase instruction, and sending the two-dimensional code to the user.

In this embodiment, the user may check automatic vending machines in the vicinity of the user via an App on a user terminal, and selects a desired automatic vending machine. While the automatic vending machine is selected, the user terminal sends a selection instruction to a server, such that the server acquires the selected automatic vending machine. The automatic vending machines displayed on the App may be all the automatic vending machines within a predetermined distance range on the map according to the current location of the user, such that the user get familiar with the specific locations of the automatic vending machines in the vicinity of the user.

After the user selects an automatic vending machine, the user may input a keyword of a commodity to be purchased on the interface of the App. The keyword may be input via a keypad or voice or another manner. The keyword input by the user is sent by the user terminal to the server; and the server judges whether the automatic vending machine contains the commodity to be purchased by the user according to the keyword and the automatic vending machine selected by the user, and sends information of the commodity to the user terminal if the automatic vending machine contains the commodity to be purchased by the user. The user may check the information of the commodity to be purchased on the interface of the App, and decide whether to purchase the commodity. When the user purchases the commodity, the server may receive a purchase instruction regarding this commodity from the user terminal, generate a two-dimensional code according to the purchase instruction and send the two-dimensional code to the user terminal. In this way, the user may take out the commodity from an entity automatic vending machine according to the two-dimensional code.

In some embodiments, information of all the commodities may also be presented on the interface of the App. As such, the user may find his or her desired commodity without inputting a keyword. After the user purchases a commodity, the server may also generate a corresponding two-dimensional code and send the two-dimensional code to the user.

In some embodiments, in addition to the two-dimensional code generated according to the purchase instruction, other types of verification codes may also be generated according to the purchase instruction, for example, a digital verification code or the like.

In some embodiments, when the user acquires the two-dimensional code but desires to cancel the order, the user may cancel the order by triggering a corresponding position on the interface of the App. After the order is canceled, the system may automatically return the payment and invalidate the two-dimensional code. A time range for canceling the order may be defined, and after a predetermined time expires, the order may not be canceled. In addition, a validity period of the two-dimensional code may also be defined. If the user fails to take out the commodity after the validity period expires, the two-dimensional code becomes invalid. A prompt for taking out the commodity may be sent to the user within a predetermined time period before expiration of the validity period of the two-dimensional code.

According to the embodiment of the present application, a user may directly purchase a commodity via an App, and may directly take out the commodity from an automatic vending machine according to a two-dimensional code generated when purchasing the commodity. In this way, it is more convenient for the user to purchase a commodity by using the automatic vending machine, and the problem that the conventional automatic vending machine does not support return of the purchased commodity is solved.

Embodiment 2

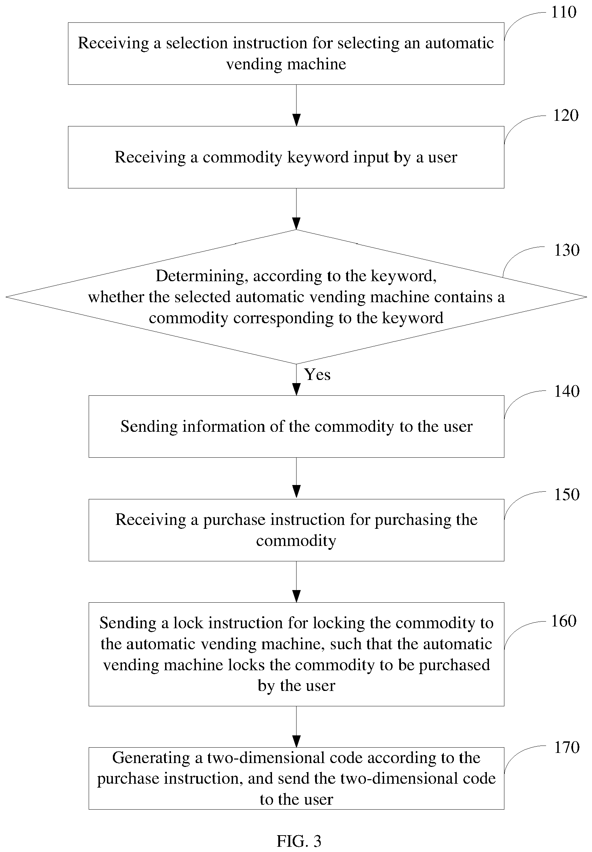

Referring to FIG. 3, FIG. 3 is a schematic flowchart of a method for vending according to Embodiment 2 of the present application. FIG. 3 is different from FIG. 2 mainly in that upon the receiving a purchase instruction for purchasing the commodity, the method further includes the following step:

step 160: sending a lock instruction for locking the commodity to the automatic vending machine, such that the automatic vending machine locks the commodity to be purchased by the user.

It may be understood that when two or more than two users purchase the same commodity from the same automatic vending machine within the same time period, it is most probable that all these users successfully purchase this commodity and acquire a corresponding two-dimensional code. In this case, this commodity may obviously not satisfy the needs of all these users, and chaos may be caused. Therefore, after the user successfully purchases a commodity, it is necessary to lock the commodity, and other users may not repeatedly purchase this locked commodity.

The process of locking the purchased commodity may be storing information of each commodity in the automatic vending machine to a server, and assign a unique ID to each commodity. When a commodity is purchased by a user, the server sends the ID of the commodity to the automatic vending machine. The automatic vending machine modifies a sale state of the commodity to a sold state from a for-sale state according to the ID, and the automatic vending machine may not recommend this commodity even in response to an external operation regarding this commodity. It should be noted that when the validity period of the two-dimensional code expires but the user fails to take out the commodity, the automatic vending machine modifies the commodity from the sold state to the for-sale state according to an unlock instruction sent by the server.

According to the embodiment of the present application, a user may directly purchase a commodity via an App; after the user successfully purchases the commodity, a corresponding two-dimensional code for taking out the commodity may be generated; and an automatic vending machine may quickly locks the commodity purchased by the user. In this way, it is more convenient for the user to purchase a commodity by using the automatic vending machine, and the problem that the conventional automatic vending machine does not support return of the purchased commodity is solved, the commodity is prevented from being repeatedly purchased, and user experience is enhanced.

Embodiment 3

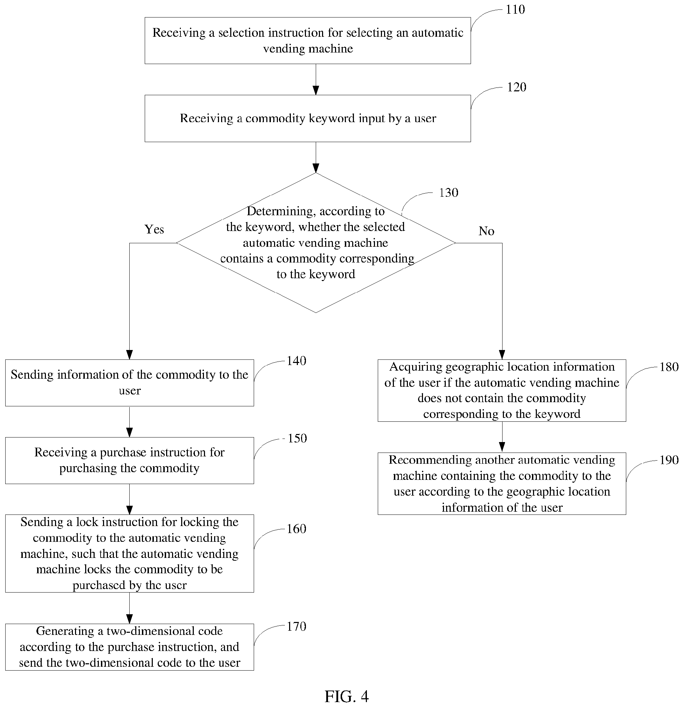

Referring to FIG. 4, FIG. 4 is a schematic flowchart of a method for vending according to Embodiment 4 of the present application. FIG. 4 is different from FIG. 3 mainly in that the method further includes the following steps:

step 180: acquiring geographic location information of the user if the automatic vending machine does not contain the commodity corresponding to the keyword; and

step 190: recommending another automatic vending machine containing the commodity to the user according to the geographic location information of the user.

In this embodiment, if the automatic vending machine initially selected by the user does not contain a commodity to be purchased by the user, other automatic vending machines containing the commodity to be purchased by the user is recommended to the user according to the current geographic location information of the user. The user selects an automatic vending machine according to the recommendation, and takes out the commodity according to a two-dimensional code.

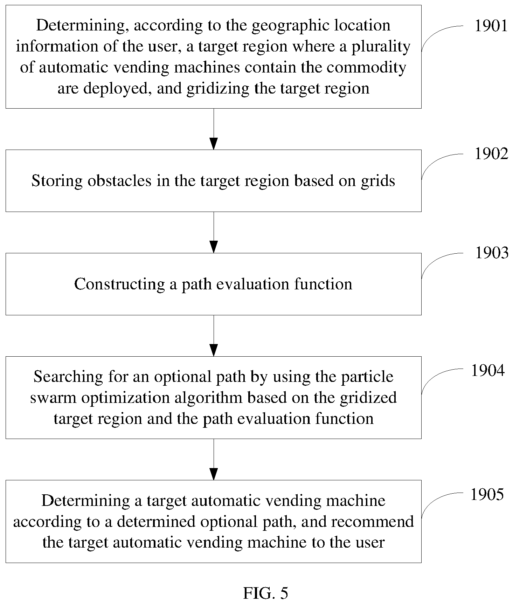

As illustrated in FIG. 5, the recommending another automatic vending machine containing the commodity to the user according to the geographic location information of the user specifically includes the following steps:

step 1901: determining, according to the geographic location information of the user, a target region where a plurality of automatic vending machines are deployed, and gridizing the target region, wherein the plurality of automatic vending machines all contain the commodity;
step 1902: storing obstacles in the target region based on grids;
step 1903: constructing a path evaluation function;
step 1904: searching for an optional path by using the particle swarm optimization algorithm based on the gridized target region and the path evaluation function; and
step 1905: determining a target automatic vending machine according to a determined optional path, and recommending the target automatic vending machine to the user.

In this embodiment, paths of automatic vending machines are planed by using the particle swarm optimization algorithm, such that an optimal automatic vending machine containing the commodity is recommended to the user. Firstly, in a two-dimensional plane, molding is performed for the environment where the user and the automatic vending machines are located by using the gridization method. Effectiveness of the environment modeling is critical to high-efficient planning and voidance of obstacles, and the gridization method features convenient and quick modeling. A plurality of grids may be spliced to replace the same category of obstacles, for example, buildings, houses, rivers and the like. Since the granularity of the grid exerts a great impact on the accuracy of path planning, a great category of obstacles may be refined. For example, the buildings or houses may be further categorized into office building, dwelling building and the like, or may be further categorized according to the heights of the buildings or houses. Afterwards, the grids of the refined small category of obstacles may be combined.

After the environment modeling is performed by using the gridization method, a path evaluation function may be constructed. In this embodiment, in construction of the path evaluation function, three factors including time, distance and traffic are mainly taken into consideration. The path evaluation function is: $f(p) = \omega_1 time + \omega_2 traffic + \omega_3 length$, wherein $\omega_1$, $\omega_2$ and $\omega_3$ are weight coefficients, time represents the time elapsed when the user arrives at the automatic vending machine from a location of the user, traffic represents traffic conditions in a distance from the location of the user to the automatic vending machine, and length represents a path length from the location of the user to the automatic vending machine.

In some embodiments, weather, transportation tool, traffic fees and the like factors may also be taken into consideration in the construction of the path evaluation function.

Further, the optional path is searched by using the traditional particle swarm optimization algorithm. The search process includes: determining parameters, maximum iteration count and swarm size of the particle swarm, and initializing the particle swarm; calculating an adaptive value of each particle according to the path evaluation function $f(p) = \omega_1 time + \omega_2 traffic + \omega_3 length$; updating an optimal adaptive value of each particle and an optimal adaptive value of the entire swarm, wherein during this process, if the adaptive value of the particle at the current position is superior over the adaptive value of an individual at an optimal position, the adaptive value at the current position is used as the optimal adaptive value of the particle, and if the adaptive values of all the individuals at the optimal position includes an optimal adaptive value of the entire swarm, the adaptive value appeared in all the individuals at the optimal position may be used to replace the optimal adaptive value of the entire swarm; and judging whether the current iteration count reaches a predetermined maximum iteration count, wherein if the current iteration count reaches the predetermined maximum iteration count, the current path is determined as the optimal path, and if the current iteration count does not reach the predetermined maximum iteration count, the position and speed of the particle are updated according to the position and speed update formula of the particle and the path planning is continuously performed. The position and speed update formula of the particle is disclosed in the related art, which is thus not described herein any further.

After the optimal path is acquired according to the particle swarm optimization algorithm, it is determined the automatic vending machine corresponding to the optimal path is a target automatic vending machine of the user, and thus the automatic vending machine is recommended to the user.

According to the embodiment of the present application, a user may directly purchase a commodity via an App; after the user successfully purchases the commodity, a corresponding two-dimensional code for taking out the commodity may be generated; and an automatic vending machine may quickly locks the commodity purchased by the user. Further, if the automatic vending machine does not contain the commodity to be purchased by the user, another automatic vending machine containing the desired commodity may be recommended to the user according to a current location of the user. In this way, it is more convenient for the user to purchase a commodity by using the automatic vending machine, and the problem that the conventional automatic vending machine does not support return of the purchased commodity is solved, the commodity is prevented from being repeatedly purchased, and user experience is enhanced.

Embodiment 4

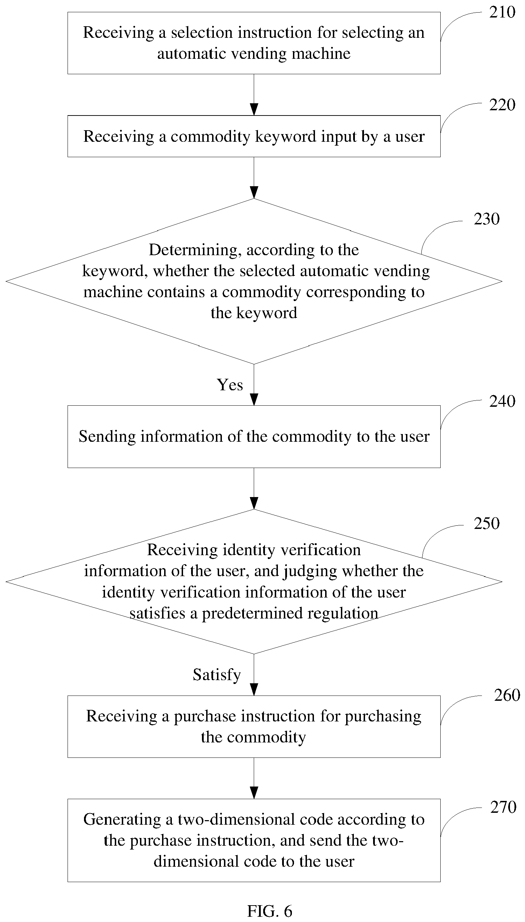

Referring to FIG. 6, FIG. 6 is a schematic flowchart of a method for vending according to Embodiment 4 of the present application. As illustrated in FIG. 6, the method includes the following steps:

step 210: receiving a selection instruction for selecting an automatic vending machine;

step 220: receiving a commodity keyword input by a user;

step 230: determining, according to the keyword, whether the selected automatic vending machine contains a commodity corresponding to the keyword;

step 240: sending information of the commodity to the user if the automatic vending machine contains the commodity corresponding to the keyword;

step 250: receiving identity verification information of the user, and judging whether the identity verification information of the user satisfies a predetermined regulation;

step 260: receiving a purchase instruction for purchasing the commodity if the identity verification information of the user satisfies the predetermined regulation; and

step 270: generating a two-dimensional code according to the purchase instruction, and sending the two-dimensional code to the user.

It should be understood that not all the commodities may be sold to consumers, for example, cigarettes, wines and the like commodities that may not be sold to the non-adults. Therefore, it is necessary to verify the identity of a consumer before the consumer purchases a commodity.

In the embodiment of the present application, before the user purchases the commodity, identity information of the user is further verified to judge whether the user is a user who can purchase the commodity within a predetermined regulation.

The process of identity verification includes: scanning an ID card of the user (including the front side and the back side of the ID card), and scanning a facial image of the user. The age of the user is identified by using the ID card, and whether the user is the real user himself or herself is judged by comparing the image on the ID card with the currently scanned facial image. It is determined that the user identity passes the verification and the user is allowed to purchase the commodity only when it is determined that the age of the user satisfies the predetermined regulation and the user is the real user himself or herself.

In addition, when the user has carry out the identity verification on the App for purchasing commodities, and the identity verification is successful, the identity information of the user may be verified by using other methods, for example, fingerprint recognition, voice recognition or the like. Fingerprint information or voice information of the current user are acquired, and the acquired fingerprint information or voice information is matched with fingerprint information or voice information acquired for pre-verification. If the acquired fingerprint information or voice information is consistent with the fingerprint information or voice information acquired for pre-verification, the identity verification of the current user is successful, and the user is allowed to purchase the commodities in the automatic vending machine.

It should be noted that in the embodiment of the present application, the identity information of the user may be verified by using other methods.

An embodiment of the present application provides a method for vending. In the method, a user is allowed to directly purchase a commodity on an App and take out the commodity by using a two-dimensional code generated when purchasing the commodity only when the identity of the user satisfies a predetermined regulation. In this way, in one aspect, it is more convenient for the user to purchase a commodity, and the problem that the conventional automatic vending machine does not support return of the purchased commodity is solved; and in another aspect, the method for vending of the automatic vending machine is enriched, and the non-adults are effectively protected.

Embodiment 5

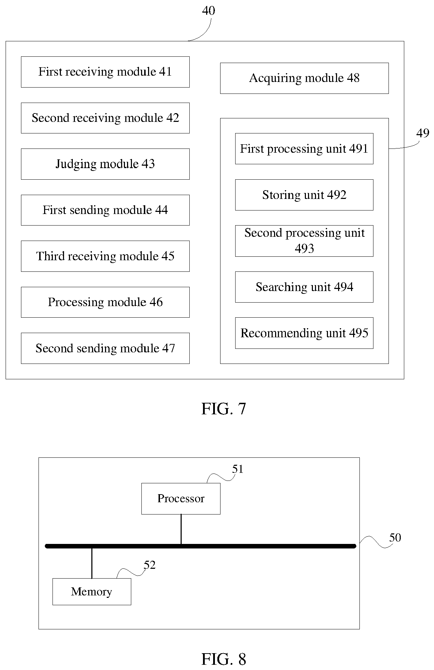

Referring to FIG. 7, FIG. 7 is a schematic structural diagram of a apparatus for vending 40 according to Embodiment 7 of the present application. As illustrated in FIG. 7, the apparatus 40 includes: a first receiving module 41, a second receiving module 42, a judging module 43, a first sending module 44, a third receiving module 45 and a processing module 46.

The first receiving module 41 is configured to receive a selection instruction for selecting an automatic vending machine; the second receiving module 42 is configured to receive a commodity keyword input by a user; the judging module 43 is configured to determine, according to the keyword, whether the selected automatic vending machine contains a commodity corresponding to the keyword; the first sending module 44 is configured to send information of the commodity to the user if the automatic vending machine contains the commodity corresponding to the keyword; the third receiving module 45 is configured to receive a purchase instruction for purchasing the commodity; and the processing module 46 is configured to generate a two-dimensional code according to the purchase instruction, and send the two-dimensional code to the user.

In the embodiment of the present application, the first receiving module 41 and the second receiving module 42 are respectively connected to the judging module 43, the judging module 43 judges, according to the received keyword, whether the selected automatic vending machine contains the commodity corresponding to the keywords, and if the selected automatic vending machine contains the commodity, the judging module 43 sends a judgment result to the first sending module and the first sending module 44 sends information of the commodity to the user. The third receiving module 45 sends the received purchase instruction to the processing module 46, and the processing module 46 generates a two-dimensional code and returns the two-dimensional code to the user terminal.

In some other embodiments, still referring to FIG. 7, the apparatus further includes: a second sending module 47. The second sending module 47 is configured to send a lock instruction for locking the commodity to the automatic vending machine, such that the automatic vending machine locks the commodity to be purchased by the user. Herein, after the user purchases the commodity via the App on the user terminal, the second sending module 47 sends a lock instruction to the automatic vending machine to lock the purchased commodity, which prevents other users from purchasing the commodity.

In some other embodiments, still referring to FIG. 7, the apparatus further includes: an acquiring module 48 and a recommending module 49. The acquiring module 48 is configured to acquire geographic location information of the user if the automatic vending machine does not contain the commodity corresponding to the keyword; and the recommending module 49 is configured to recommend another automatic vending machine containing the commodity to the user according to the geographic location information of the user.

The recommending module 49 includes: a first processing unit 491, a storing unit 492, a second processing unit 493, a searching unit 494 and a recommending unit 495. The first processing unit 491 is configured to determine, according to the geographic location information of the user, a target region where a plurality of automatic vending machines are deployed, and gridize the target region, wherein the plurality of automatic vending machines all contain the commodity; the storing unit 492 is configured to store obstacles in the target region based on grids; the second processing unit 493 is configured to construct a path evaluation function; the searching unit 494 is configured to search for an optional path by using the particle swarm optimization algorithm based on the gridized target region and the path evaluation function; and the recommending unit 495 is configured to determine a target automatic vending machine according to a determined optional path, and recommend the target automatic vending machine to the user.

The path evaluation function is $f(p) = \omega_1 time + \omega_2 traffic + \omega_3 length$, wherein $\omega_1$ and $\omega_2$ are weight coefficients, time represents the time elapsed when the user arrives at the automatic vending machine from a location of the user, traffic represents traffic conditions in a distance from the location of the user to the automatic vending machine, and length represents a path length from the location of the user to the automatic vending machine.

It should be noted that information exchange and execution procedures and the like content between various modules and units in the apparatus for vending according to the embodiment of the present application are based on the same inventive concept as the method embodiments of the present application, and thus the corresponding content in the method embodiments is also applicable to the apparatus for vending. Various modules in the embodiment of the present application may be practiced by using independent hardware or software, and a functionality combination of various units may be practiced by using independent hardware or software according to the actual needs.

The embodiment of the present application provides a apparatus for vending . A user may directly purchase a commodity via an App; after the user successfully purchases the commodity, a corresponding two-dimensional code for taking out the commodity may be generated; and an automatic vending machine may quickly locks the commodity purchased by the user. Further, if the automatic vending machine does not contain the commodity to be purchased by the user, another automatic vending machine containing the desired commodity may be recommended to the user according to a current location of the user. In this way, it is more convenient for the user to purchase a commodity by using the automatic vending machine, and the problem that the conventional automatic vending machine does not support return of the purchased commodity is solved, the commodity is prevented from being repeatedly purchased, and user experience is enhanced.

Embodiment 6

Referring to FIG. 8, FIG. 8 is a schematic structural diagram illustrating hardware of an electronic device 50 for performing the method for vending according to Embodiment 5 of the present application.

As illustrated in FIG. 8, the electronic device 50 includes at least one processor 51 and a memory 52, and FIG. 8 uses one processor 51 as an example.

The at least one processor 51 and the memory 52 may be connected via a bus or in another manner, and FIG. 7 uses connection via the bus as an example.

The memory 52, as a non-volatile computer readable storage medium, may be configured to store non-volatile software programs, and non-volatile computer executable programs and modules, for example, the program instructions/modules corresponding to the methods according to the embodiments of the present application (for example, the first receiving module 41, the second receiving module 42, the judging module 43, the first sending module 44, the third sending module 45 and the processing module as illustrated in FIG. 7). The non-volatile software programs, instructions and modules stored in the memory 52, when being executed, cause the processor 51 to perform various function applications and data processing of a server, that is, performing the methods according to the above method embodiments.

The memory 52 may include a program memory area and data memory area, wherein the program memory area may store operation systems and application programs needed by at least function; and the data memory area may store data created according to the usage of the apparatus for vending. In addition, the memory 52 may include a high speed random access memory, or include a non-volatile memory, for example, at least one disk storage device, a flash memory device, or another non-volatile solid storage device. In some embodiments, the memory 52 optionally includes memories remotely configured relative to the processor 51. These memories may be connected to a apparatus over a network. The above examples include, but not limited to, the Internet, Intranet, local area network, mobile communication network and a combination thereof.

One or more modules are stored in the memory 52, and when being executed by the at least one processor 51, perform the method for vending according to any of the above method embodiments, for example, performing steps 110 to 150 and step 170 in the method as illustrated in FIG. 2, steps 110 to 170 in the method as illustrated in FIG. 3, steps 110 to 190 in the method as illustrated in FIG. 4, steps 1901 to 1905 in the method as illustrated in FIG. 5 and steps 210 to 270 in the method as illustrated in FIG. 6; and implementing the functions of modules 41 to 49 as illustrated in FIG. 7 and units 491 to 495 as illustrated in FIG. 7.

The product may perform the method according to the embodiments of the present application, has corresponding function modules for performing the method, and achieves the corresponding beneficial effects. For technical details that are not illustrated in detail in this embodiment, reference may be made to the description of the methods according to the embodiments of the present application.

The electronic device according to the embodiment of the present application is practiced in various forms, including, but not limited to: a server: which provides services for computers, and includes a processor, a hard disk, a memory, a system bus and the like; wherein the server is similar to the general computer in terms of architecture; however, since more reliable services need to be provided, higher requirements are imposed on the processing capability, stability, reliability, security, extensibility, manageability and the like of the device; and another electronic device having the data interaction function.

Embodiment 7

An embodiment of the present application further provides a non-volatile computer readable storage medium storing computer executable instructions. The computer executable instructions, when being executed by an electronic device, cause the electronic device to perform the method for vending according to any of the above method embodiments, for example, performing steps 110 to 150 and step 170 in the method as illustrated in FIG. 2, steps 110 to 170 in the method as illustrated in FIG. 3, steps 110 to 190 in the method as illustrated in FIG. 4, and steps 1901 to 1905 in the method as illustrated in FIG. 5; and implementing the functions of the modules 41 to 49and the modules 491 to 495 as illustrated in FIG. 7.

Embodiment 8

An embodiment of the present application further provides a computer program product. The computer program product includes a computer program stored on a non-volatile computer readable storage medium. The computer program includes program instructions. The computer instructions, when being executed by a computer, cause the computer to perform the method according to any of the above method embodiments, for example, performing steps 110 to 150 and step 170 in the method as illustrated in FIG. 2, steps 110 to 170 in the method as illustrated in FIG. 3, steps 110 to 190 in the method as illustrated in FIG. 4, and steps 1901 to 1905 in the method as illustrated in FIG. 5; and implementing the functions of the modules 41 to 49and the modules 491 to 495 as illustrated in FIG. 7.

The above described apparatus embodiments are merely for illustration purpose only. The units which are described as separate components may be physically separated or may be not physically separated, and the components which are illustrated as units may be or may not be physical units, that is, the components may be located in the same position or may be distributed into a plurality of network units. A part or all of the modules may be selected according to the actual needs to achieve the objectives of the technical solutions of the embodiments.

According to the above embodiments of the present application, a person skilled in the art may clearly understand that the embodiments of the present application may be implemented by means of hardware or by means of software plus a necessary general hardware platform. Persons of ordinary skill in the art may understand that all or part of the steps of the methods in the embodiments may be implemented by a program instructing relevant hardware. The program may be stored in a computer readable storage medium and may be executed by at least one processor. When the program runs, the steps of the methods in the embodiments are performed. The storage medium may be any medium capable of storing program codes, such as read-only memory (ROM), a random access memory (RAM), a magnetic disk, or a compact disc-read only memory (CD-ROM).

Finally, it should be noted that the above embodiments are merely used to illustrate the technical solutions of the present application rather than limiting the technical solutions of the present application. Under the concept of the present application, the technical features of the above embodiments or other different embodiments may be combined, the steps therein may be performed in any sequence, and various variations may be derived in different aspects of the present application, which are not detailed herein for brevity of description. Although the present application is described in detail with reference to the above embodiments, persons of ordinary skill in the art should understand that they may still make modifications to the technical solutions described in the above embodiments, or make equivalent replacements to some of the technical features; however, such modifications or replacements do not cause the essence of the corresponding technical solutions to depart from the spirit and scope of the technical solutions of the embodiments of the present application.

**Claims**

1. A method for vending, **characterized in that** the method comprises:

   receiving a selection instruction for selecting an automatic vending machine;
   receiving a commodity keyword input by a user;
   determining, according to the keyword, whether the selected automatic vending machine contains a commodity corresponding to the keyword;
   sending information of the commodity to the user if the automatic vending machine contains the commodity corresponding to the keyword;
   receiving a purchase instruction for purchasing the commodity; and
   generating a two-dimensional code according to the purchase instruction, and sending the two-dimensional code to the user.

2. The method according to claim 1, **characterized in that** upon the receiving a purchase instruction for purchasing the commodity, the method further comprises:
   sending a lock instruction for locking the commodity to the automatic vending machine, such that the automatic vending machine locks the commodity to be purchased by the user.

3. The method according to claim 1 or 2, **characterized by** further comprising:

   acquiring geographic location information of the user if the automatic vending machine does not contain the commodity corresponding to the keyword; and
   recommending another automatic vending machine containing the commodity to the user according to the geographic location information of the user.

4. The method according to claim 3, **characterized in that** the recommending another automatic vending machine containing the commodity to the user according to the geographic location information of the user comprises:

   determining, according to the geographic location information of the user, a target region where a plurality of automatic vending machines are deployed, and gridizing the target region, wherein the plurality of automatic vending machines all contain the commodity;
   storing obstacles in the target region based on grids;
   constructing a path evaluation function;
   searching for an optional path by using the particle swarm optimization algorithm based on the gridized target region and the path evaluation function; and
   determining a target automatic vending machine according to a determined optional path, and recommending the target automatic vending machine to the user.

5. The method according to claim 4, **characterized in that** the path evaluation function is:

$$f(p) = \omega_1 time + \omega_2 traffic + \omega_3 length,$$

wherein $\omega_1$, $\omega_2$ and $\omega_3$ are weight coefficients, time represents the time elapsed when the user arrives at the automatic vending machine from a location of the user, traffic represents traffic conditions in a distance from the location of the user to the automatic vending machine, and length represents a path length from the location of the user to the automatic vending machine.

6. A apparatus for vending, **characterized by** comprising:

   a first receiving module, configured to receive a selection instruction for selecting an automatic vending machine;
   a second receiving module, configured to receive a commodity keyword input by a user;
   a judging module, configured to judge, according to the keyword, whether the selected automatic vending machine contains a commodity corresponding to the keyword;
   a first sending module, configured to send information of the commodity to the user if the automatic vending machine contains the commodity corresponding to the keyword;
   a third receiving module, configured to receive a purchase instruction for purchasing the commodity; and
   a processing module, configured to generate a two-dimensional code according to the purchase instruction, and send the two-dimensional code to the user.

7. The apparatus according to claim 6, **characterized by** further comprising:
a second sending module, configured to send a lock instruction for locking the commodity to the automatic vending machine, such that the automatic vending machine locks the commodity to be purchased by the user.

8. The apparatus according to claim 6 or 7, **characterized by** further comprising:

    an acquiring module, configured to acquire geographic location information of the user if the automatic vending machine does not contain the commodity corresponding to the keyword; and
    a recommending module, configured to recommend another automatic vending machine containing the commodity to the user according to the geographic location information of the user.

9. The apparatus according to claim 8, **characterized in that** the recommending module comprises:

    a first processing unit, configured to determine, according to the geographic location information of the user, a target region where a plurality of automatic vending machines are deployed, and gridize the target region, wherein the plurality of automatic vending machines all contain the commodity;
    a storing unit, configured to store obstacles in the target region based on grids;
    a second processing unit, configured to construct a path evaluation function;
    a searching unit, configured to search for an optional path by using the particle swarm optimization algorithm based on the gridized target region and the path evaluation function; and
    a recommending unit, configured to determine a target automatic vending machine according to a determined optional path, and recommend the target automatic vending machine to the user.

10. The apparatus according to claim 9, **characterized in that** the path evaluation function is:

$$f(p) = \omega_1 time + \omega_2 traffic + \omega_3 length ,$$

wherein $\omega_1$, $\omega_2$ and $\omega_3$ are weight coefficients, time represents the time elapsed when the user arrives at the automatic vending machine from a location of the user, traffic represents traffic conditions in a distance from the location of the user to the automatic vending machine, and length represents a path length from the location of the user to the automatic vending machine.

11. An electronic device, **characterized by** comprising:

    at least one processor; and
    a memory communicably connected to the at least one processor; wherein
    the memory stores instructions executable by the at least one processor, wherein, the instructions, when being executed by the at least one processor, cause the at least one processor to perform the method for vending as claimed in claims 1 to 5.

12. A non-volatile computer readable storage medium, **characterized in that** the computer readable storage medium stores computer executable instructions that when executed by a computer cause the computer to perform the method for vending as claimed in claims 1 to 5.

13. A computer program product, **characterized in that** the computer program product comprises a computer program stored on a non-volatile computer readable storage medium, and the computer program comprises a program instruction that when executed by a computer cause the computer to perform the method for vending as claims 1 to 5.

FIG. 1

```
                                                                        ┌─ 110
┌────────────────────────────────────────────────────────────────┐
│      Receiving a selection instruction for selecting an automatic │
│                        vending machine                            │
└────────────────────────────────────────────────────────────────┘
                                 │
                                 ▼                                       ┌─ 120
┌────────────────────────────────────────────────────────────────┐
│           Receiving a commodity keyword input by a user           │
└────────────────────────────────────────────────────────────────┘
                                 │
                                 ▼                                       ┌─ 130
              Determining, according to the keyword,
      whether the selected automatic vending machine contains a
                 commodity corresponding to the keyword
                                 │
                                Yes
                                 ▼                                       ┌─ 140
┌────────────────────────────────────────────────────────────────┐
│          Sending information of the commodity to the user         │
└────────────────────────────────────────────────────────────────┘
                                 │
                                 ▼                                       ┌─ 150
┌────────────────────────────────────────────────────────────────┐
│      Receiving a purchase instruction for purchasing the          │
│                          commodity                                │
└────────────────────────────────────────────────────────────────┘
                                 │
                                 ▼                                       ┌─ 170
┌────────────────────────────────────────────────────────────────┐
│      Generating a two-dimensional code according to the           │
│   purchase instruction, and send the two-dimensional code         │
│                          to the user                              │
└────────────────────────────────────────────────────────────────┘
```

FIG. 2

Receiving a selection instruction for selecting an automatic vending machine — 110

Receiving a commodity keyword input by a user — 120

Determining, according to the keyword, whether the selected automatic vending machine contains a commodity corresponding to the keyword — 130

Yes

Sending information of the commodity to the user — 140

Receiving a purchase instruction for purchasing the commodity — 150

Sending a lock instruction for locking the commodity to the automatic vending machine, such that the automatic vending machine locks the commodity to be purchased by the user — 160

Generating a two-dimensional code according to the purchase instruction, and send the two-dimensional code to the user — 170

FIG. 3

Receiving a selection instruction for selecting an automatic vending machine ⟋ 110

Receiving a commodity keyword input by a user ⟋ 120

Determining, according to the keyword, whether the selected automatic vending machine contains a commodity corresponding to the keyword ⟋ 130

Yes

No

Sending information of the commodity to the user ⟋ 140

Receiving a purchase instruction for purchasing the commodity ⟋ 150

Sending a lock instruction for locking the commodity to the automatic vending machine, such that the automatic vending machine locks the commodity to be purchased by the user ⟋ 160

Generating a two-dimensional code according to the purchase instruction, and send the two-dimensional code to the user ⟋ 170

Acquiring geographic location information of the user if the automatic vending machine does not contain the commodity corresponding to the keyword ⟋ 180

Recommending another automatic vending machine containing the commodity to the user according to the geographic location information of the user ⟋ 190

FIG. 4

Determining, according to the geographic location information of the user, a target region where a plurality of automatic vending machines contain the commodity are deployed, and gridizing the target region — 1901

↓

Storing obstacles in the target region based on grids — 1902

↓

Constructing a path evaluation function — 1903

↓

Searching for an optional path by using the particle swarm optimization algorithm based on the gridized target region and the path evaluation function — 1904

↓

Determining a target automatic vending machine according to a determined optional path, and recommend the target automatic vending machine to the user — 1905

FIG. 5

```
┌──────────────────────────────────────────────┐        ⟋ 210
│ Receiving a selection instruction for selecting an │
│           automatic vending machine            │
└──────────────────────────────────────────────┘
                       │
                       ▼
┌──────────────────────────────────────────────┐        ⟋ 220
│    Receiving a commodity keyword input by a user   │
└──────────────────────────────────────────────┘
                       │
                       ▼
                ◇ Determining, according to the        ⟋ 230
        keyword, whether the selected automatic vending
        machine contains a commodity corresponding to
                        the keyword ◇
                       │
                     Yes │
                       ▼
┌──────────────────────────────────────────────┐        ⟋ 240
│    Sending information of the commodity to the user  │
└──────────────────────────────────────────────┘
                       │
                       ▼
                ◇ Receiving identity verification       ⟋ 250
        information of the user, and judging whether the
            identity verification information of the user
              satisfies a predetermined regulation ◇
                       │
                   Satisfy │
                       ▼
┌──────────────────────────────────────────────┐        ⟋ 260
│  Receiving a purchase instruction for purchasing   │
│                  the commodity                 │
└──────────────────────────────────────────────┘
                       │
                       ▼
┌──────────────────────────────────────────────┐        ⟋ 270
│  Generating a two-dimensional code according to   │
│   the purchase instruction, and send the two-     │
│         dimensional code to the user            │
└──────────────────────────────────────────────┘
```

FIG. 6

EP 3 637 380 A1

40

First receiving module 41

Second receiving module 42

Judging module 43

First sending module 44

Third receiving module 45

Processing module 46

Second sending module 47

Acquiring module 48

49

First processing unit 491

Storing unit 492

Second processing unit 493

Searching unit 494

Recommending unit 495

FIG. 7

51

Processor

50

52

Memory

FIG. 8

18

# INTERNATIONAL SEARCH REPORT

International application No.

PCT/CN2017/107889

## A. CLASSIFICATION OF SUBJECT MATTER

G07F 11/00 (2006.01) i; G06Q 30/02 (2012.01) i

According to International Patent Classification (IPC) or to both national classification and IPC

## B. FIELDS SEARCHED

Minimum documentation searched (classification system followed by classification symbols)

G07F

Documentation searched other than minimum documentation to the extent that such documents are included in the fields searched

Electronic data base consulted during the international search (name of data base and, where practicable, search terms used)

CNABS; VEN: 售货机, 二维码, 对应, 验证码, 指令, 自动, 位置, target, vending machine, two-dimensional code, automatic, location, address

## C. DOCUMENTS CONSIDERED TO BE RELEVANT

| Category* | Citation of document, with indication, where appropriate, of the relevant passages | Relevant to claim No. |
|---|---|---|
| Y | CN 103136863 A (HANGZHOU NEUTREES CULTURES & INNOVATION CO., LTD.) 05 June 2013 (05.06.2013), description, paragraphs [0015]-[0023], and figures 1-5 | 1-13 |
| Y | CN 106355751 A (JIANGSU PAINUO OPTOELECTRONICS TECHNOLOGY CO., LTD.) 25 January 2017 (25.01.2017), description, paragraphs [0011] and [0012], and figure 1 | 1-13 |
| PX | CN 107248222 A (SHENZHEN ZHENGPIN CHUANGXIANG TECHNOLOGY CO., LTD.) 13 October 2017 (13.10.2017), entire document | 1-13 |
| A | CN 105225344 A (JIANGMEN DONGJI HARDWARE PRODUCT CO., LTD.) 06 January 2016 (06.01.2016), entire document | 1-13 |
| A | JP 2000293455 A (MIZUNO YOSHIRO) 20 October 2000 (20.10.2000), entire document | 1-13 |
| A | KR 20130013463 A (LEE JIN HO) 06 February 2013 (06.02.2013), entire document | 1-13 |

☐ Further documents are listed in the continuation of Box C.          ☒ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| 08 March 2018 | 20 March 2018 |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>XU, Lingyun<br><br>Telephone No. (86-10) 62085775 |

Form PCT/ISA /210 (second sheet) (July 2009)

## INTERNATIONAL SEARCH REPORT
Information on patent family members

| | International application No. |
|---|---|
| | PCT/CN2017/107889 |

| Patent Documents referred in the Report | Publication Date | Patent Family | Publication Date |
|---|---|---|---|
| CN 103136863 A | 05 June 2013 | CN 103136863 B | 30 November 2016 |
| CN 106355751 A | 25 January 2017 | None | |
| CN 107248222 A | 13 October 2017 | None | |
| CN 105225344 A | 06 January 2016 | None | |
| JP 2000293455 A | 20 October 2000 | None | |
| KR 20130013463 A | 06 February 2013 | None | |

Form PCT/ISA /210 (patent family annex) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2017104344346